(19) Europäisches Patentamt
European Patent Office
Office européen des brevets

(11) **EP 2 642 330 A1**

(12) **EUROPEAN PATENT APPLICATION**
published in accordance with Art. 153(4) EPC

(43) Date of publication:
**25.09.2013 Bulletin 2013/39**

(51) Int Cl.:
**G02B 26/10** (2006.01)          **B60K 35/00** (2006.01)
**G02B 27/01** (2006.01)

(21) Application number: **11841652.8**

(22) Date of filing: **15.09.2011**

(86) International application number:
**PCT/JP2011/071089**

(87) International publication number:
**WO 2012/066847 (24.05.2012 Gazette 2012/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.11.2010 JP 2010258442**

(71) Applicant: **Nippon Seiki Co., Ltd.
Niigata 940-8580 (JP)**

(72) Inventors:
• **SEKIYA,Shun
Nagaoka
Niigata (JP)**

• **HADA, Makoto
Nagaoka
Niigata (JP)**
• **NAKAHARA, Tsuyoshi
Nagaoka
Niigata (JP)**

(74) Representative: **Jackson, Richard Eric
Carpmaels & Ransford LLP
One Southampton Row
London WC1B 5HA (GB)**

(54) **DISPLAY DEVICE**

(57)      A display device capable of obtaining stable light output even in a state of low brightness and capable of displaying desired display colors is provided. An output control means (80) causes image-forming light to be emitted from a laser source (10) on the basis of image information when the scanning position of an RGB laser beam according to a scanning means is within a display range (20), and causes detection light to be emitted from the laser source (10) when the scanning position is outside the display range. In addition, the output control means (80): changes the drive current of the laser source (10) according to a first current value that is less than a threshold current value, and second and third current values that are greater than or equal to the threshold value, when the scanning position according to the scanning means (20) is outside the display range; and drives the laser source (10) according to the drive current obtained by calculating the current-light output characteristics on the basis of the light intensity detected by a laser beam detection unit (40).

【FIG 2 】

EP 2 642 330 A1

**Description**

**TECHNICAL FIELD**

The present invention relates to a display device, and in particular to, a display device which displays an image by scanning light emitted from a laser light source.

**BACKGROUND ART**

In the past, there have been proposed various types of head-up display devices for vehicles, which project a display image on a semitransparent plate such as a windshield of the vehicle or a combiner, and display a virtual image. Patent Literature 1 discloses an example of such a head-up display device.

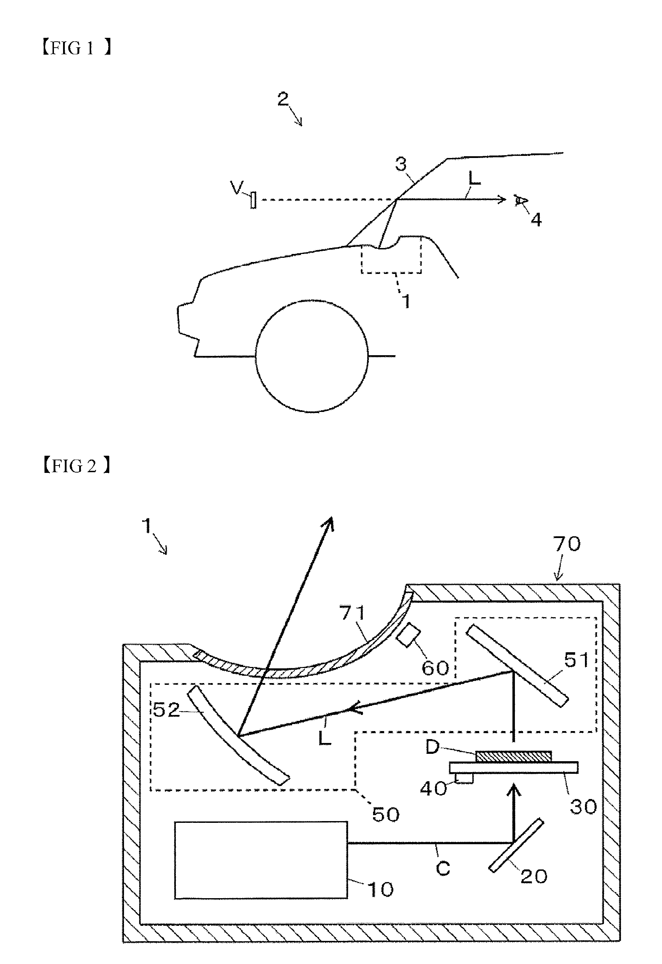

A head-up display device 1 for the vehicles is installed in a dashboard of a vehicle. Display light L which the head-up display device 1 for the vehicles projects is reflected to the vehicle driver 3 by a windshield 2 , and the vehicle driver 3 can visually identify a virtual image V in being superimposed on a landscape (see Fig. 1).

In such a head-up display device 1 for the vehicles, use of a semiconductor laser as a light source has been proposed. Patent Literature 2 discloses an example of such a head-up display device.

Such a head-up display device 1 for the vehicles is provided with a semiconductor laser, a scanning system, and a screen, and is configured to generate a display image by scanning a laser light emitted from the semiconductor laser on the screen with the scanning system.

However, a threshold current value of a light source changes due to outside air temperature changes and heat generated upon emission of light from a light source. When a threshold current value of a light source changes, current-light output characteristics of a light  source change, and a problem that the brightness of an image to display is not stable occurs.

To solve the above problem, Patent Literature 3 discloses a technology as a means to keep a fixed output level of a light source, in which a photodetector is provided in an image display device, a light output of a light source is detected with a photodetector by changing a current value supplied to a light source at more than two points, a bias current supplied to a light source is set by computing current-light output characteristics (e.g., a threshold current value and a quantum efficiency) of a light source based on the detection result, and a pulse current corresponding to the current-light output characteristics of a light source are supplied to a light source.

**CITATION LIST**

**PATENT LITERATURE**

Patent Literature 1: Japanese Published Unexamined Application No. 5-193400
Patent Literature 2: Japanese Published Unexamined Application No. 7-270711
Patent Literature 3: Japanese Published Unexamined Application No. 2009-244797

**SUMMARY OF THE INVENTION**

**PROBLEMS TO BE SOLVED BY THE INVENTION**

However, in the image display device of Patent Literature 3, a light output obtained when a laser driving current lower than a threshold current value is applied is ignored, a light output is detected by changing a laser driving current at more than two points over a threshold current value, and current- light output characteristics are computed.

On the other hand, in the head-up display device 1 for the vehicles, it is necessary to set a large dimming ratio by largely changing display brightness in accordance with outside light intensity. Several thousand to several ten thousand cd/m$^2$ or higher is required at a maximum, and several cd/ m$^2$ is required at a minimum. To attain such a minimum brightness, it is necessary to adjust a laser driving current to lower than a threshold current value and to use also light that is not oscillated as a laser. Thus, it is necessary to drive a laser light source at a predetermined current value based on current -light output characteristics when a current value is lower than a threshold value.

Therefore, when the method of Patent Literature 3 is applied to the head- up display device 1 for the vehicles, a threshold current value cannot be exactly specified, current- light output characteristics when a current value is lower than a threshold value are unknown, display brightness becomes unstable particularly in a low brightness condition, and a problem that a desired display color cannot be obtained occurs.

## MEANS FOR SOLVING THE PROBLEM

A display device according to the present invention comprising a laser light source to emit laser light, a scanning means to scan the laser light on a screen, an output control means to control an output of the laser light source, and a laser light detector to detect a light intensity of the laser light, wherein the output control means causes the laser light source to emit light for image forming based on image information when a position of scanning the laser light with the scanning means is within a display area, and causes the laser light source to emit light for detection when the scanning position is a predetermined position out of a display area, and the output control means changes a driving current of the laser light source at a first current value lower than a threshold current value and at second and third current values higher than or equal to a threshold current value when a position of scanning with the scanning means is out of a display area, and drives the laser light source with a driving current obtained by computing current-light output characteristics based on a light intensity detected with the laser light detector.

Further, the display device according to the present invention, the current- light output characteristics have a first straight line with a linearity connecting a zero point and a light output value detected at the first current value, and a second straight line with a linearity connecting light output values detected at the second current value and at the third current value, assumes an intersection point of the first straight line and the second straight line to be a bending point, and takes the bending point as a threshold current value.

Furthermore, the display device according to the present invention is provided with an outside light detector to detect outside light intensity.

Moreover, the display device according to the present invention, the output control means drives the laser light source at a driving current obtained from the results of computing the current- light output characteristics, so as to obtain a predetermined light output value based on the outside light intensity detected with the outsidee light detector.

## EFFECT OF THE INVENTION

Stable light output can be obtained even in a low brightness condition, and display is possible in a desired display color.

## BRIEF DESCRIPTION OF THE DRAWINGS

[Fig. 1] Fig. 1 is an explanatory drawing of a virtual image according to an embodiment of the present invention.
[Fig. 2] Fig. 2 is a sectional view of a display device according to the above embodiment.
[Fig. 3] Fig. 3 is a conceptual diagram of a synthetic laser light generation means according to the above embodiment.
[Fig. 4] Fig. 4 is a graph showing current value-light output value characteristics of a semiconductor laser according to the above embodiment.
[Fig. 5] Fig. 5 is a graph showing temperature characteristics of current value-light output value characteristics of a semiconductor laser according to the above embodiment.
[Fig. 6] Fig. 6 is an explanatory diagram of electrical configuration according to the above embodiment.
[Fig. 7] Fig. 7 is a conceptual diagram showing current value-light output characteristics of red laser light according to the above embodiment.
[Fig. 8] Fig. 8 is a conceptual diagram showing current value-light output characteristics of green laser light according to the above embodiment.
[Fig. 9] Fig. 9 is a conceptual diagram showing current value-light output characteristics of blue laser light according to the above embodiment.
[Fig. 10] Fig. 10 is an explanatory diagram showing a position of a color sensor according to the above embodiment.

## MODE FOR CARRYING OUT THE INVENTION

Hereinafter, an explanation will be given of an embodiment, in which the present invention is applied to a head-up display device 1.

A head-up display device 1 is provided in a dashboard of a vehicle 2, and is configured to reflect display light L showing a generated display image D on a windshield 3, and permits a vehicle driver 4 to visually identify a virtual image V of a display image D showing vehicle inforamtion. A vehicle driver 4 can visually identify a virtual image V without turning eyes away from the front.

As shown in Fig. 2, a head-up display device 1 comprises a synthetic laser light generator (a laser light source) 10, a MEMS scanner (a scanning means) 20, a transmissive screen (a screen) 30, a color sensor (a laser light detector) 40, a reflecting unit 50, a light sensor (an outside light detector) 60, and a housing 70.

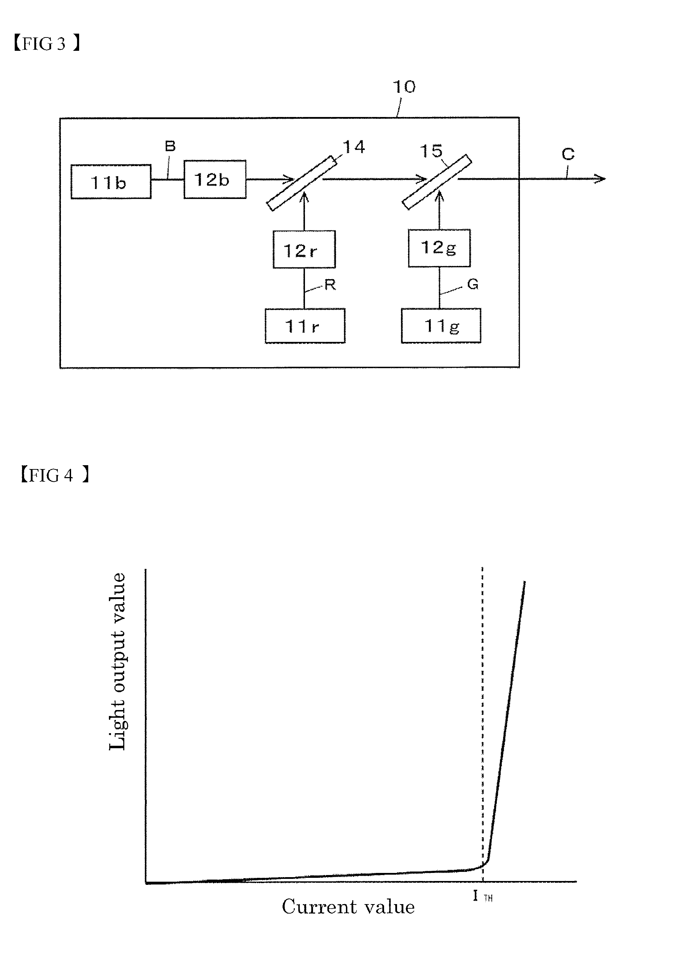

The synthetic laser light generator 10 synthesizes three color laser light R, G, B, and emits one synthetic laser light C. The synthetic laser light generator 10 comprises laser diodes 11r, 11g, 11b, condensing optical units 12r, 12g, 12b, and dichroic mirrors 14 and 15 (see Fig. 3).

The condensing optical units 12r, 12g, 12b condense the laser light R, G, B emitted from the diodes 11r, 11g, 11b, respectively. The condensing optical unit 12r is disposed on the way of the optical path of the laser light R emitted from the laser diode 11r, and converges the laser light R to form convergent light. The same occurs between the condensing optical unit 12g and the laser diode 11g, and between the condensing optical unit 12b and laser diode 11b.

The dichroic mirrors 14 and 15 are comprised of mirrors with a thin or multilayer dielectric film formed on the surface, and are configured to reflect or transmit the laser light R, G, B emitted from the laser diodes 11r, 11g, 11b, and to synthesize the laser light R, G, R into one synthetic laser light C.

The dichroic mirror 14 is located in the advancing directions of the laser light R and B from the condensing optical unit 12r and the condensing optical unit 12b, and is arranged at a certain angle with respect to the advancing direction of each laser light R and B, thereby transmitting the laser light B and reflecting the laser light R. In other words, the dichroic mirror 14 synthesizes the laser light R and laser light B.

The dichroic mirror 15 is located in the light advancing directions of the condensing optical unit 12g and the dichroic mirror 14, and arranged at a certain angle with respect to each light advancing direction, thereby transmitting the synthesized laser light R and B and reflecting the laser light G. In other words, the dichroic mirror 15 further synthesizes the laser light R and B with the laser light G.

As described above, the laser light R, G, B are synthesized into one synthetic laser light C, and emitted from the synthetic laser light generator 10. As each of the laser diodes 11r, 11g and 11b is arranged in being adjusted, a polarizing direction of each synthesized laser light R, G, B is identical, and is determined in consideration of the polarization-dependence of the reflectivity of the window shield 3. The dichroic mirrors 14 and 15 synthesize also LED light, and the synthesized light is emitted from the synthetic laser light generator 10.

The MEMS (MicroElectroMedical System) scanner 20 scans the synthetic laser light C emitted from the synthetic laser light generator 10, and generates a display image D on the transmissive screen 30.

The transmissive screen 30 is comprised of a diffusing plate, a holographic diffuser, and a microlens array, etc, and is configured to receive the synthetic laser light C scanned with the MEMS scanner 20 on the lower surface, and to display a display image D on the upper surface. The color sensor 40 is provided on the lower surface of the transmissive screen 30.

The reflecting unit 50 is an optical system provided in the optical path between the transmissive screen 30 and the window shield 3, so that a display image D displayed on the upper surface of the transmissive screen 30 is formed as a virtual image V at a desired position and in a desired size. The reflecting unit 50 comprises a plane mirror 51, and a magnifying mirror 52.

The plane mirror 51 is a plain total reflection mirror or the like, and is located at a position to receive display light L showing a display image displayed on the transmissive screen 30, and reflects the display light L toward the magnifying mirror 52.

The magnifying mirror 52 is a concave mirror or the like, and reflects the display light L reflected from the plane mirror 51 on its concave surface, and transmits the reflected light toward the window shield 3. A virtual image V thereby formed has a size magnified from the display image D displayed on the transmissive screen 30.

A housing 70 is made of hard resign or the like, and is box shaped having a window part 71 of predetermined size in the upper part. The housing 70 contains in place the synthetic laser light generator 10, a MEMS scanner 20, a color sensor 40, a transmissive screen 30, a reflecting unit 50, and a light sensor 60. The light sensor 60 is located under the window part 71.

The window part 71 is made of translucent resin such as acrylic, curved, and fixed to an opening of the housing 70 by welding or the like. The window part 71 transmits the light reflected from the magnifying mirror 52. The light sensor 60 is provided under the window part 71.

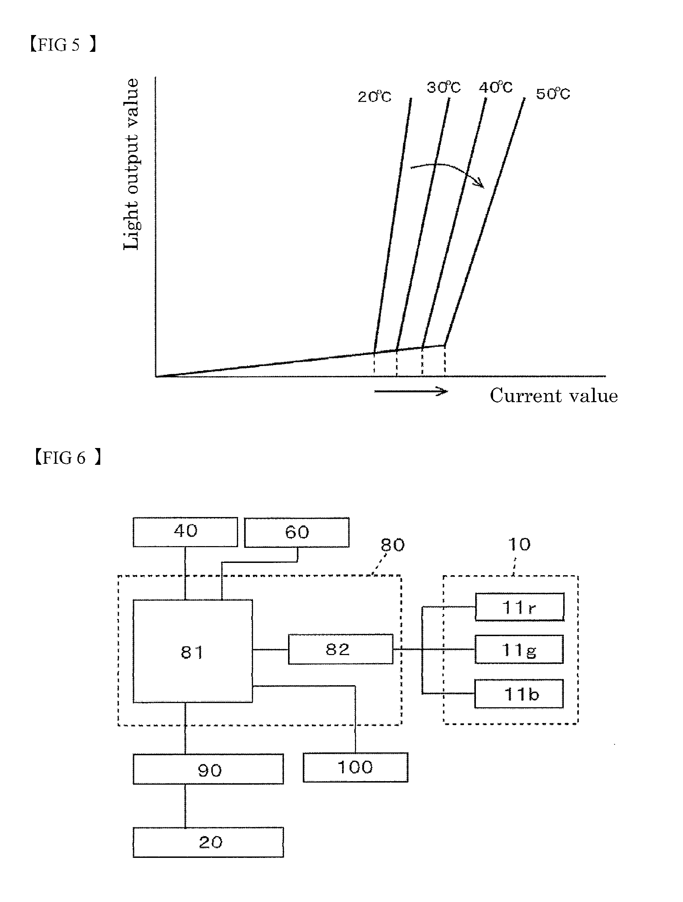

Next, the laser diodes 11r, 11g and 11b of the synthetic laser light generator 10 will be described in detail based on Fig. 4 and Fig. 5. The laser diode 11r emits red laser light R, the laser diode 11g emits green laser light G, and the laser diode 11b emits blue laser light B, respectively. The laser diodes 11r, 11g and 11b emit nonlaser light at a driving current lower than a threshold current value ITH, and emits laser light R, G, B at a driving current higher than or equal to a threshold current value ITH (see Fig. 4) .

The current-light output characteristics of the laser diodes 11r, 11g and 11b are different in each region of a current lower than and higher than or equal to a threshold current value ITH, but are linear in both regions. The reason why such a threshold current value ITH is required is that the energy to reverse electron distribution in an active layer and the amount of amplified light are required to be greater than the amount of loss.

The laser light R, G, B are oscillated by induced emission at a threshold current value ITH or higher, and nonlaser light is emitted by natural emission at a current lower than a threshold current value ITH. Thus, in the nonlaser light lower than the threshold current value ITH, a wavelength bandwidth is magnified by by several nm compared with the laser light R, G, B. However, as a main wavelength and chromaticity of emission color rarely change near the threshold current value ITH, it is unnecessary to change a mixing ratio of the laser light R, G, B at the threshold current value ITH or higher to obtain a desired color even at lower than the threshold current value ITH.

Further, as shown in Fig. 5, in the current- light output characteristics of the laser diodes 11r, 11g and 11b, the threshold current value ITH rises with a temperature rise, and over the threshold current value ITH, the characteristic deterioration by the drop of the efficiency comes to be seen. Thus, to attain a desired brightness without changing a color even when the temperature changes, it is necessary to appropriately change the current values of the laser diodes 11r, 11g and 11b to prevent a change of light output value.

The laser diodes 11r, 11g and 11b are arranged to have identical polarizing directions (electric field oscillation directions) of the laser light R, G, B emitted from these laser diodes and finally passed through or reflected by the dichroic mirror 15.

Next, an electrical configuration of the head- up display device 1 is explained with reference to Fig. 6.

The color sensor 40 detects the light intensity of the laser light R, G, B, and outputs analog data of the light intensity to a microcomputer 81. The light sensor 60 detects outside light intensity, and outputs analog data of the light intensity to the microcomputer 81.

The microcomputer 81 controls various operations of the head-up display device 1. The microcomputer 81 is supplied with image data for displaying a display image D as a video signal 10 by LVDS (LowVoltageDifferentialSignal) communication or the like. The microcomputer 81 previously stores position data of the color sensor 40 located at a predetermined position.

The microcomputer 81 receives a video signal 100, generates control data to attain the intensity required by the video signal 100, and drives the laser diodes 11r, 11g, 11b through an output control unit 82, thereby emitting a synthetic laser light C from the synthetic laser light generator 10 to the MEMS scanner 20.

The above-mentioned control data means data to adjust the light intensity of laser light R, G, B emitted from the laser diodes 11r, 11g, 11b to the intensity level required by the video signal 100, based on digital data of a laser light intensity received from the color sensor 40.

The microcomputer 81 drives the MEMS scanner 20 through a MEMS driver 90. The microcomputer 81 drives the laser diodes 11r, 11g, 11b according to a predetermined timing based on the previously stored position data, and enters obtained laser light into the color sensor 40. The output control unit 82 is supplied with control data from the microcomputer 81, and controls the outputs of the laser diodes 11r, 11g, 11b based on the supplied control data. The control unit (output control means) 80 comprises the microcomputer 81, and the output control unit 82.

The operation of the head-up display device 1 configured as described above can be briefly explained. (1) Under the control of the control unit 80, the synthetic laser light generator 10 emits a synthetic laser light C, and the MEMS scanner 20 scans the received synthetic laser light C toward the transmissive screen 30, thereby creating a display image D. (2) Display light L showing a display image D displayed on the transmissive screen 30 is reflected by the reflecting unit 50, and the reflected light is emitted toward the window shield 3. (3) The display light L showing the display image D emitted from the head-up display device 1 is reflected by the window shield 3, whereby a virtual image V of the display image D is formed in front of the window shield 3. In this manner, the head-up display device 1 enables a driver 4 to visually identify the display image D as a virtual image V.

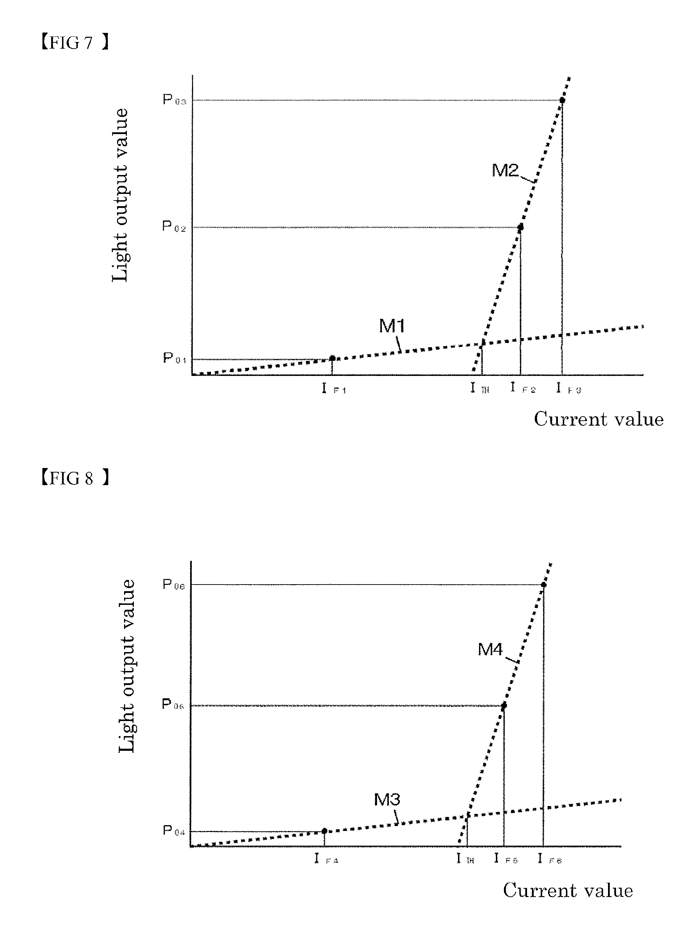

Then, based on Fig. 7 to Fig. 10, an explanation is given of a method of detecting the laser light intensity and a method of controlling an output when displaying a display image D.

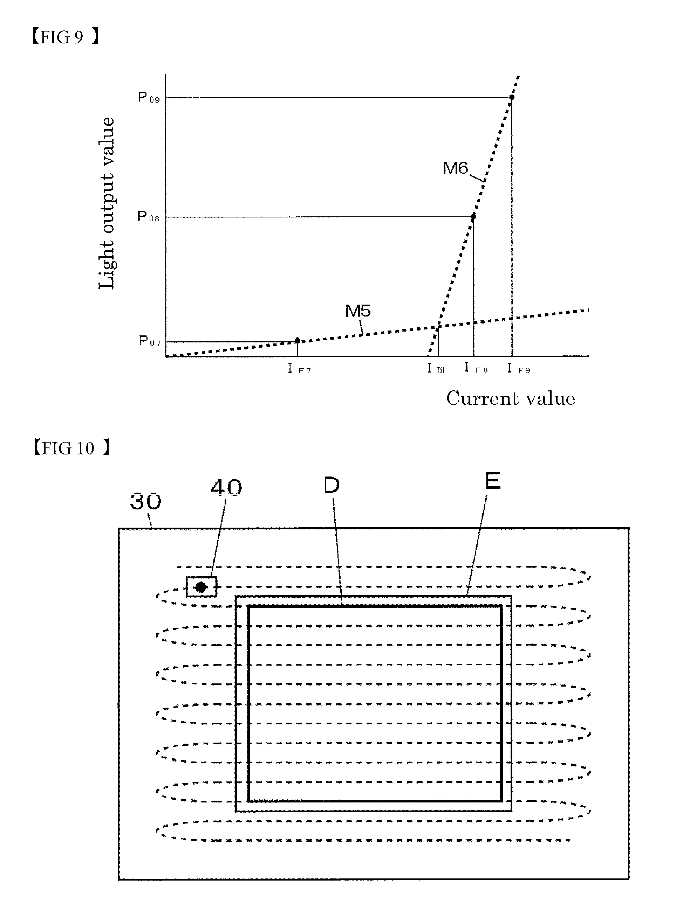

Fig. 10 is a diagram showing a screen 30 viewed from the scanner 20. A display area E of the screen 30 is smaller than a scannable range of the MEMS scanner 20. Because, the MEMS scanner 20 oscillates its reflection surface by resonance, and the reflection surface operation speed slows down or completely stops near a point of turning a scanning direction. Further, when the reflection surface operation speed of the MEMS scanner 20 extremely changes with respect to a dot clock, the display image D becomes distorted, and the resolution declines.

A display area E cannot be used when detecting the laser light intensity, the color sensor 40 is placed out of the display area E. In other words, as the color sensor 40 is placed in a nondisplay area out of the display area E that the MEMS scanner 20 can scan, laser intensity detection is possible without affecting a display image D.

The microcomputer 81 specifies a scanning position of laser light R, G, B according to a synchronizing signal of the MEMS scanner 20, records the position information of the previously installed color sensor 40, and drives the laser diodes 11r, 11g, 11b through the output control unit 82 at timing that a scanning position overlaps the position of the color sensor 40.

When driving laser diodes 11r, 11g, 11b at the above timing for each frame, the microcomputer 81 changes a light output and laser diodes 11r, 11g, 11b to drive. For example, the microcomputer 81 drives the laser diode 11r at a current value IF1 for a first frame, drives the laser diode 11r at a current value IF2 for a second frame, and drives the laser diode 11r at a current value IF3 for a third frame. At this time, the color sensor 40 detects a light output value PO1, a light output value PO2, and a light output value PO3 corresponding to the current values, and outputs them to the microcomputer 81.

The current values IF1, IF2, IF3 are determined by average current-light output characteristics of the laser diode 11r to use. The current value IF1 is lower than the threshold current value ITH1, the current value IF2 is higher than or equal to the threshold current value ITH1, and the current value IF3 is higher than or equal to the current value IF2. However, the current values IF1, IF2, IF3 are required to be lower or higher than or equal to the threshold current value ITH1, even when the threshold current value ITH1 changes due to individual difference or temperature characteristics of the laser diode 11r. For example, the current value IF2 is higher than or equal to the threshold current value ITH1, but is required to be kept at the threshold current value ITH1 or higher even when the laser diode 11r rises to a high temperature and the threshold current value ITH1 increases. To satisfy the above conditions, the current values IF1, IF2, IF3 may be changed in accordance with the temperatue of the laser diode 11r.

The microcomputer 81 computes current-light output characteristics from three light output values PO1, PO2, PO3 of the laser diodes supplied from the color sensor 40. The computed current-light output characteristics are comprised of a first straight line M1 and a second straight line M2, and can be expressed in a graph in which the threshold current value ITH1 represents a bending point. The first straight line M1 is a straight line connecting an origin point (0, 0) and (the current value IF1, and the light output value PO1).

Assuming the current value to be x and the light output value to be y, the first straight line M1 can be expressed by an equation 1.

[Equation 1]

$$ y = \frac{Light\ output\ value\ PO1}{Current\ value\ IF1}\ X \quad ...(Equation\ 1) $$

On the other hand, the second straight line M2 is a straight line connecting (the current value IF2, and the light output value PO2) and (the current value IF3, and the light output value PO3), and can be expressed by an equation 2.

[Equation 2]

$$ y = \frac{Light\ output\ value\ PO3 - Light\ output\ value\ PO2}{Current\ value\ IF3 - Current\ value\ IF2}\ x $$

$$ + \left( Light\ output\ value\ PO2 \right. $$

$$ - \frac{Light\ output\ value\ PO3 - Light\ output\ value\ PO2}{Current\ value\ IF3 - Current\ value\ IF2} $$

$$ \left. \cdot\ Current\ value\ IF2 \right) ... (Equation\ 2) $$

Compute the intersection point of the first straight line M1 and the second straight line M2, that is the threshold current value ITH1, and regard the first straight line M1 as current-light output characteristics of the laser diode 11r, when the computed value is lower than the threshold current value ITH1, and regard the second straight line M2 as current-light output characteristics of the laser diode 11r, when the computed value is higher than or equal to the threshold current value ITH1.

Similar to the laser diode 11r, the laser diode 11g is driven at current values IF4 and IF5 for frames 4 to 6, and the laser diode 11b is driven at current values IF7, IF8, IF9 for frames 7 to 9. The color sensor 40 detects light output values PO4, PO5, PO6, PO7, PO8, PO9 corresponding to the current values, and outputs them to the microcomputer 81. The current-light output characteristics of the laser diodes 11g and 11b consist of first straight lines M3 and M5, and second straight lines M4 and M6, which are adjoined at the threshold current values ITH2 and ITH3.

The microcomputer 81 drives the laser diodes 11r, 11g, 11b at the current values obtained from the computed results via the output control unit 82, in the next frame that the computation is finished. In particular, when the outside light intensity detected with the light sensor 60 is applied to the microcomputer 81, the microcomputer 81 sets a display brightness level suitable for the applied outside light intensity level, and determines a driving current value from the above current-light output characteristics to obtain the brightness level. The output control unit 82 drives the laser dioses 11r, 11g, 11b at the respective driving current values outputted from the microcomputer 81.

A period to keep the computed current-light output characteristics is optional, and can be changed according to environments and purposes. After a defined period expires, the light intensity of each diode is detected again, and the computation cycle is repeated.

The head-up display device 1 according to the present invention periodically computes current-light output characteristics of laser diodes 11r, 11g, 11b, and determines the driving current values of the laser diodes 11r, 11g, 11b based on the computed results. Thus, as current-light output characteristics corresponding to each temperature is referred to, even when the temperatures of the laser diodes 11r, 11g, 11b change, the brightness and color are rarely changed. Further, as threshold current values ITH1, ITH2, ITH3 are specified, and current-light output characteristics when a current value is lower than a threshold value are also computed, the laser diodes 11r, 11g, 11b can be stably driven even in a low brightness condition, and a large dimming ratio can be set.

Though one laser light intensity is detected for one frame in the embodiment, it is permitted to detect three laser light intensities for each frame, by driving the laser diodes 11r, 11g, 11b at the current value IF1, at the current value IF4, and at the current value IF7, respectively, for a first frame, at the current value IF2, at the current value IF5, and at the current value 8 ,respectively, for a second frame, and at the current value IF3, at the current value IF6, and at the current value IF9, respectively, for a third frame.

## INDUSTRIAL APPLICABILITY

The present invention relates to a display device for vehicles, which is mounted on a movable body such as an automobile, and is applicable as a display device for projecting a display image on a vehicle windshield or the like, and displaying a virtual image.

## DESCRIPTION OF REFERENCE NUMERALS

1 ... Head-up display device for vehicles
2 ... Vehicle
3 ... Windshield
4 ... Vehicle driver
10 ... Synthetic laser light generator (Laser light source)
11r ... Laser diode
11g ... Laser diode
11b ... Laser diode
12r ... Condensing optical unit
12g ... Condensing optical unit
12b ... Condensing optical unit
14 ... Dichroic mirror
15 ... Dichroic mirror
20 ... MEMS scanner (Scanning means)
30 ... Transmissive screen (Screen)
40 ... Color sensor (Laser light detector)
50 ... Reflecting unit
51 ... Plane mirror
52 ... Magnifying mirror
60 ... Light sensor (Outside light detector)
70 ... Housing
71 ... Window part
80 ... Control unit (Output control means)
81 ... Microcomputer
90 ... MEMS driver
100 ... Video signal
V ... Virtual image
L ... Display light
R ... Laser light
G ... Laser light

B ... Laser light
C ... Synthetic laser light

**Claims**

1. A display device comprising a laser light source to emit laser light, a scanning means to scan the laser light on a screen, an output control means to control an output of the laser light source, and a laser light detector to detect a light intensity of the laser light,
wherein the output control means causes the laser light source to emit light for image forming based on image information when a scanning position of the laser light with the scanning means is within a display area, and causes the laser light source to emit light for detection when the scanning position is a predetermined position out of a display area, and
the output control means changes a driving current of the laser light source at a first current value lower than a threshold current value and at second and third current values higher than or equal to a threshold current value when a scanning position with the scanning means is out of a display area, and drives the laser light source with a driving current obtained by computing current-light output characteristics based on a light intensity detected with the laser light detector.

2. The display device according to claim 1, wherein:

   the current-light output characteristics have:
   a first straight line with a linearity connecting a zero point and a light output value detected at the first current value; and
   a second straight line with a linearity connecting a light output values detected at the second current value and at the third current value, and
   assume an intersection point of the first straight line and the second straight line to be a bending point, and take the bending point as a threshold current value.

3. The display device according to claim 1, further comprising an outside light detector to detect outside light intensity.

4. The display device according to claim 3, wherein
the output control means drives the laser light source at a driving current obtained from the results of computing the current-light output characteristics, so as to obtain a predetermined light output value based on an outside light intensity detected with the outside light detector.

【FIG 1 】

【FIG 2 】

【FIG 3 】

【FIG 4 】

【FIG 5 】

【FIG 6 】

【FIG 7 】

【FIG 8 】

【FIG 9 】

【FIG 10 】

| INTERNATIONAL SEARCH REPORT | International application No. |
|---|---|
| | PCT/JP2011/071089 |

**A. CLASSIFICATION OF SUBJECT MATTER**
*G02B26/10*(2006.01)i, *B60K35/00*(2006.01)i, *G02B27/01*(2006.01)i

According to International Patent Classification (IPC) or to both national classification and IPC

**B. FIELDS SEARCHED**

Minimum documentation searched (classification system followed by classification symbols)
G02B26/10, 27/01, G03B21/00, H01S5/068, 5/0683, B60K35/00

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus(JDreamII), JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2009-244797 A (Brother Industries, Ltd.),<br>22 October 2009 (22.10.2009),<br>paragraphs [0027] to [0108]; all drawings<br>& US 2009/0244407 A1 & EP 2112832 A1 | 1,3,4<br>2 |
| Y<br>A | JP 2009-111259 A (Toshiba Corp.),<br>21 May 2009 (21.05.2009),<br>paragraphs [0071] to [0076]; fig. 10, 13<br>& US 2009/0141760 A1 | 1,3,4<br>2 |
| Y<br>A | JP 2010-085786 A (Brother Industries, Ltd.),<br>15 April 2010 (15.04.2010),<br>paragraphs [0026] to [0035]<br>(Family: none) | 3,4<br>1,2 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 October, 2011 (18.10.11) | 25 October, 2011 (25.10.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/071089 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2009-212423 A  (Seiko Epson Corp.), 17 September 2009 (17.09.2009), entire text; all drawings & US 2009/0224136 A1 | 1-4 |

Form PCT/ISA/210 (continuation of second sheet) (July 2009)

**EP 2 642 330 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5193400 A
- JP 7270711 A
- JP 2009244797 A